Europäisches Patentamt

European Patent Office

Office européen des brevets

(19)

(11) Veröffentlichungsnummer: **0 079 981**
**B1**

(12) **EUROPÄISCHE PATENTSCHRIFT**

(45) Veröffentlichungstag der Patentschrift:
**14.05.86**

(21) Anmeldenummer: **81109873.0**

(22) Anmeldetag: **25.11.81**

(51) Int. Cl.⁴: **G 01 B 9/02**, G 02 B 27/10

(54) **Phasen-Symmetrisierung optischer Wellenflächen.**

(43) Veröffentlichungstag der Anmeldung:
**01.06.83 Patentblatt 83/22**

(45) Bekanntmachung des Hinweises auf die Patenterteilung:
**14.05.86 Patentblatt 86/20**

(84) Benannte Vertragsstaaten:
**DE FR GB IT**

(56) Entgegenhaltungen:
**EP - A - 0 040 700**
**DE - B - 2 636 498**

**JOURNAL OF THE OPTICAL SOCIETY OF AMERICA,**
**Band 63, Nr. 2, 1973, D. KOHLER et al. "Source**
**reconstruction from the modulus of the correlation**
**function: A practical approach to the phase problem of**
**optical coherence theory", Seiten 126-134**
**APPLIED OPTICS, Band 19, Nr. 24, 1980, F. MARTIN**
**"Folded-wave interferometer for laser-matter**
**interaction studies", Seiten 4230-4232**

(73) Patentinhaber: **IBM DEUTSCHLAND GMBH,**
**Pascalstrasse 100, D-7000 Stuttgart 80 (DE)**
(84) Benannte Vertragsstaaten: **DE**

(73) Patentinhaber: **International Business Machines**
**Corporation, Old Orchard Road, Armonk, N.Y. 10504 (US)**
(84) Benannte Vertragsstaaten: **FR GB IT**

(72) Erfinder: **Häusler, Gerd, Dr., Alterlanger Strasse 33,**
**D-8520 Erlangen (DE)**
Erfinder: **Järisch, Walter, Dr., Finkenweg 15,**
**D-7030 Böblingen (DE)**
Erfinder: **Makosch, Günter, Stuttgarter Strasse 40,**
**D-7032 Sindelfingen-Maichingen (DE)**

(74) Vertreter: **Teufel, Fritz, Dipl.-Phys., IBM Deutschland**
**GmbH. Europäische Patentdienste Postfach 265,**
**D-8000 München 22 (DE)**

Beschreibung

Die Erfindung betrifft interferometrische Verfahren nach dem Oberbegriff des Anspruchs 1, optische Phasenmischer zur Durchführung des Verfahrens und deren Verwendung in interferometrischen Geräten.

Ein derartiges Verfahren ist aus dem Journal of the Optical Society of America, Bd. 63, Nr. 2, Februar 1973, S. 126 bis 134 bekannt. Dabei wird ein Eingangsbündel unter einem Einfallswinkel von 90° auf ein einen Scheitelwinkel von 90° sowie vollverspiegelte Kathetenflächen aufweisendes Dachkantprisma gerichtet, um zwei Ausgangsbündel zu erzeugen.

Bei vielen optischen Einrichtungen, insbesondere interferometrischen Mess- und Prüfgeräten, spielt die Form der verwendeten optischen Wellenfronten eine wesentliche Rolle. Interferometrische Messverfahren verwenden beispielsweise häufig ebene Wellenfronten in den ursprünglichen beiden Strahlbündeln (Objekt- und Referenzbündel), die zur Überlagerung gebracht werden, nachdem das Objektbündel an dem zu untersuchenden Gegenstand reflektiert wurde oder diesen Gegenstand passiert hat. Sind nun die ursprünglichen Wellenfronten der beiden Überlagerungsbündel nicht genau eben oder unterschiedlich deformiert, so ergeben sich selbst bei idealen Prüflingen verzerrte oder zusätzliche Interferenzlinien, die als nicht vorhandene Fehler des Untersuchungsobjekts missdeutet werden.

Deformationen der Wellenfront eines Lichtbündels können durch nicht perfekte optische Bauteile im optischen Strahlengang hervorgerufen werden; eine hauptsächliche Quelle derartiger Deformationen sind Kollimatorsysteme, mit denen das Licht einer punktförmigen Lichtquelle in ein Ausgangsbündel mit ebenen Wellenfronten umgesetzt werden soll.

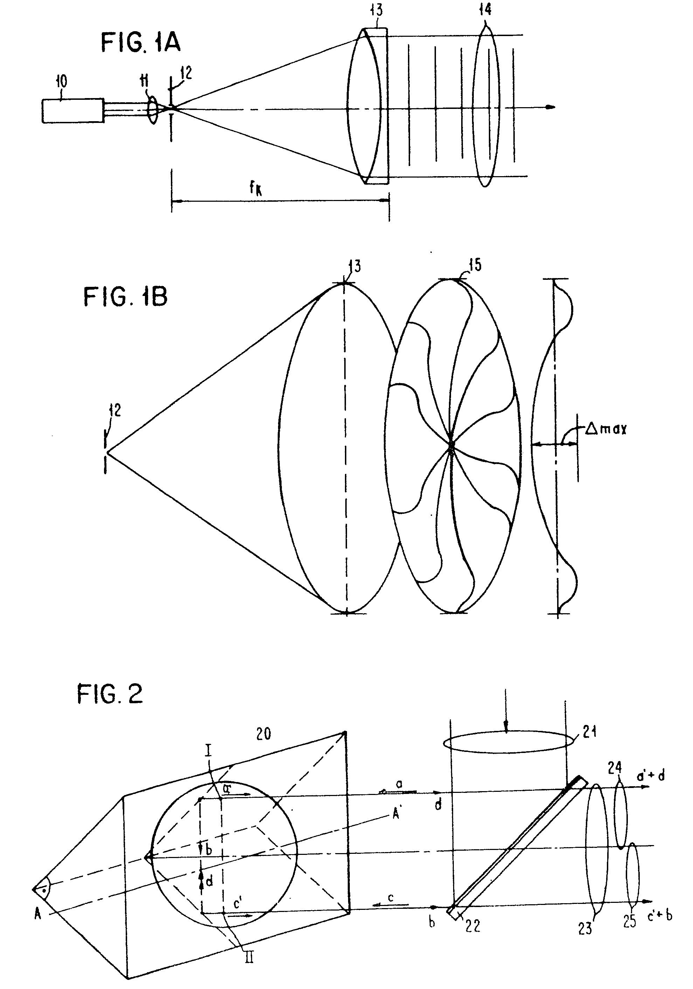

In Fig. 1 ist eine häufig gebrauchte Kollimatoranordnung zur Aufweitung eines Laserstrahlbündels skizziert. Das Ausgangsbündel eines Lasers 10 wird mit einer Sammellinse 11 in die kleine Öffnung einer Lochblende 12 fokussiert, die genau im Brennpunkt eines Kollimator-Linsensystems 13 angeordnet ist. Die Lochblende 12 mit einer Öffnung im Bereich von 1 bis 10 µm dient als Raumfilter zur Säuberung des Strahlenbündels von unerwünschten Komponenten. Anstelle eines Linsensystems 13 kann auch ein Spiegel-Kollimatorsystem verwendet werden. Bei idealer Justierung und Fehlerfreiheit der Kollimatorsysteme müssten die Wellenfronten des Ausgangsbündels 14 exakt ebene Wellen darstellen. Diese könnten nach entsprechender Teilung des Strahls an durchlässigen Platten, Spiegeln oder Gittern einer interferometrischen Messanordnung als Objekt- und Referenzstrahlenbündel zugeführt werden.

Diese idealen Verhältnisse liegen in der Praxis jedoch nicht vor, da weder ideal punktförmige Lichtquellen noch ideal fehlerfreie optische Systeme verfügbar sind. Die tatsächlichen Wellenfronten 15 des Ausgangsbündels 14 sind deformiert (Fig 1B); die Güte der Wellenfront wird durch die Angabe der über die gesamte Wellenfläche gemessenen maximalen Abweichung $\Delta_{max}$ von einer idealen Ebene angegeben. Dieser Wert $\Delta_{max}$ wächst mit dem Durchmesser eines Kollimatorsystems an und kann insbesondere bei Ausgangsbündeln 14 mit mehr als 100 mm Durchmesser nicht unter $\lambda/4$ bis $\lambda/8$ reduziert werden, wobei $\lambda$ die Wellenlänge des benutzten Lichtes ist. Bei derartigen Deformationen sind interferometrische Messungen mit höchster Genauigkeit nicht mehr möglich. Nur in wenigen Fällen kann die daraus resultierende Verzerrung von Interferenzlinien mit rechnerischen Mitteln korrigiert werden. Zu Messungen mit hoher Genauigkeit müssen die einzelnen Kollimator-Systeme auf die Wellenfrontaberration geprüft und entsprechend ausgesondert werden.

Die vorliegende Erfindung stellt sich daher die Aufgabe, interferometrische Verfahren der eingangs genannten Art anzugeben, bei denen der Einfluss deformierter Wellenflächen weitgehend unschädlich gemacht ist; ausserdem sollen Phasenmischer zur Durchführung der Verfahren angegeben werden.

Diese Aufgabe wird durch die in den Ansprüchen 1 und 3 angegebene Erfindung gelöst; Ausgestaltungen der Erfindung sind in den Ansprüchen 2 und 4 bis 9 angegeben.

Die Erfindung geht von der Erkenntnis aus, dass bei der interferometrischen Überlagerung zweier Strahlenbündel lokale Deformationen der Wellenfläche keine Wirkung haben, sofern jede lokale Deformation im einen Strahlenbündel genau der Wellenfrontdeformation an dem Ort des anderen Strahlenbündels entspricht, an dem die zur Interferenz kommenden Strahlen enthalten sind. Mit anderen Worten, die örtliche Verteilung der Wellen-Phase muss an einander entsprechenden Punkten der Bündelquerschnitte für beide Bündel genau gleich sein.

Zur Erzeugung von zwei Strahlenbündeln mit entsprechender örtlicher Phasenverteilung (Wellenfrontdeformation) macht eine Weiterbildung der Erfindung von der weiteren Erkenntnis Gebrauch, dass in vielen interferometrischen Einrichtungen die optischen Wege von Objekt- und Referenzstrahlenbündel so geführt sind, dass einfache Symmetriebeziehungen zwischen den beiden Bündeln entstehen. Werden die beiden Bündel so eingesetzt, dass sich Wellenfront-Deformationen aufheben, die zu einer Ebene symmetrisch liegen, so erfolgt die Symmetrisierung durch eine Phasenmischung eines Eingangsbündels mit Hilfe eines 90° Prismas. Bei Symmetrien mit einer Rotationsachse wird die Phasenmischung mit einem Axikon durchgeführt.

Die regelmässig begrenzten Flächen eines Prismas oder eines Axikons lassen sich ohne grosse Kosten mit bedeutend höherer Präzision herstellen als die sphärischen Flächen eines Kollimatorsystems. Interferometrische Messungen können bei Einsatz der erfindungsgemässen Phasenmischung auch mit grossen Bündelquerschnitten ohne grosse Kosten durchgeführt werden, da preiswerte Kollimatorsysteme mit grossen Bündeldurchmessern, aber eben auch grossen Wellenfrontdeformationen einsetzbar sind. Messungen mit höchster Genauigkeit werden möglich, wenn einem sehr genauen Kollimatorsystem zusätzlich Einrichtungen zur Phasenmischung zugeordnet werden.

Ausführungsbeispiele der Erfindung werden nun anhand von Zeichnungen näher erläutert. Es zeigen:

Fig. 1A, 1B die schon erläuterten Kollimatorsysteme und die dadurch eingeführten Wellenfront-Deformationen

Fig. 2 ein als Phasenmischer verwendetes Prisma

Fig. 3 als ein Phasenmischer verwendetes Axikon

Fig. 4 den schematischen Aufbau einer optischen Einrichtung zur Prüfung von Oberflächen mit einem Phasenmischer nach Fig. 2

Fig. 5 die schematische Darstellung zur optischen Prüfung von Gittern mit einem Phasenmischer nach Fig. 2.

Das in Fig. 2 zur Phasenmischung vorgeschlagene Dachkantprisma 20 (Scheitelwinkel 90°) erzeugt ein Ausgangsbündel 23, das bezüglich der Ebene durch die Achse AA' und die Scheitellinie des Prismas 20 eine symmetrische Phasenverteilung in den beiden Bündelhälften 24, 25 aufweist. Zu dieser Phasenmischung wird ein Eingangsbündel 21, z.B. von einem Laser, über einen halbdurchlässigen Spiegel 22 senkrecht auf die Hypotenusenfläche des Prismas 20 gerichtet. Jeweils zwei symmetrisch zur Linie AA' liegende Strahlen a, c werden an der teilverspiegelten Hypotenusenfläche des Prismas teilweise reflektiert (Strahlen a', c') und dringen teilweise in das Prisma ein (Strahlen b, d). Die eingedrungenen Strahlanteile b, d verlassen das Prisma nach zweimaliger Reflexion an den vollverspiegelten Kathetenflächen des Prismas in den Punkten II, bzw. I, an denen die Strahlen e', a' direkt reflektiert wurden. Die Strahlen a' und c' einerseits bzw. b und d andererseits haben bei idealer Justierung der Anordnung beim Erreichen der Punkte I, II genau gleich lange optische Weglängen durchlaufen, so dass die Ausgangsstrahlen a' + d bzw. c' + b, die symmetrisch zur Linie AA' liegen, gleiche Intensitäten und gleiche Phase aufweisen.

Beim Einbau eines Phasenmischers nach Fig. 2 in eine interferometrische Anordnung werden bei sorgfältig eingehaltenen Herstelltoleranzen des Prismas und bei genauer Justierung keine zusätzlichen Deformationen der Wellenfläche eingebaut. Die Flächen eines Prismas und eines Strahlteilers können bei der heutigen Schleif- und Poliertechnik mit Ebenheitstoleranzen von $\lambda/20$ geschliffen werden; der Scheitelwinkel des Prismas kann auf 1/100 Bogensekunde eingehalten werden. Eine entsprechende Genauigkeit lässt sich bei der Justierung des Einfallswinkels von Bündel 21 auf die Hypotenusenfläche des Prismas 20 erreichen.

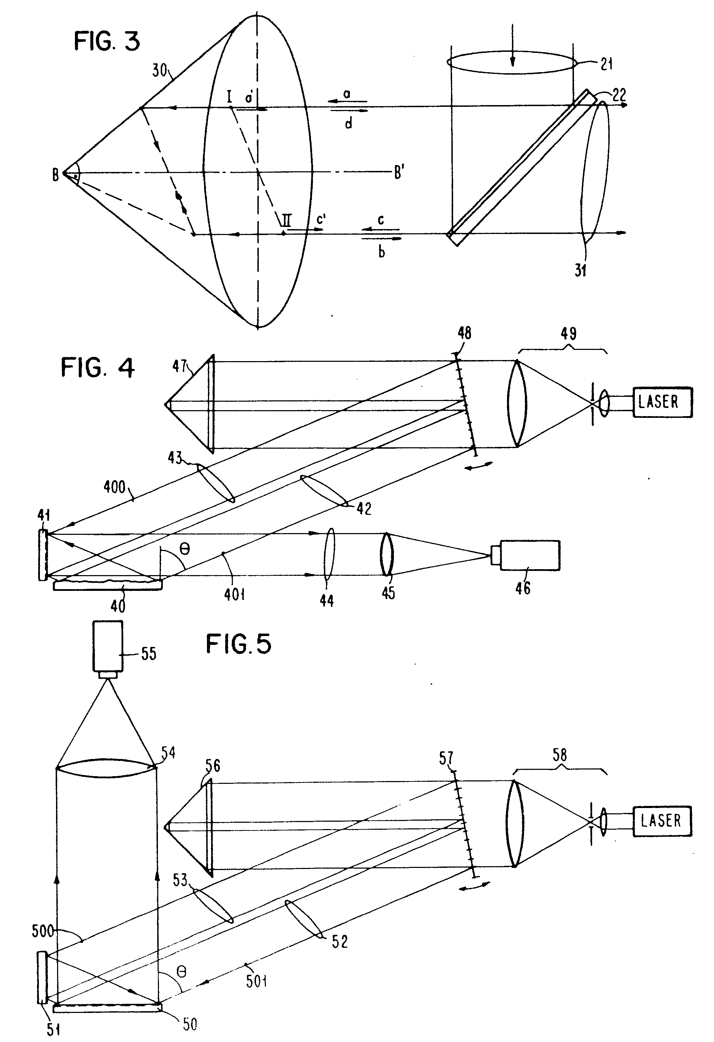

Fig. 3 zeigt eine Anordnung zur Phasenmischung, bei der die Wellenfrontdeformationen im Ausgangsbündel 31 rotationssymmetrisch zur Achse BB' sind. Dazu wird bei gleicher prinzipieller Anordnung wie in Fig. 1 anstelle eines Prismas ein Axikon 30 mit der Form eines Kegels mit Öffnungswinkel 90° verwendet, dessen Grundfläche teilverspiegelt und dessen Kegelmantel vollverspiegelt ist. Der Strahlengang entspricht bis auf die Rotationssymmetrie dem in Fig. 2; einander entsprechende Bauteile und Strahlanteile sind mit gleichen Bezugszeichen gekennzeichnet. Da die Rotationssymmetrie des Axikons auch die Spiegelsymmetrie des prismatischen Phasenmischers enthält, kann das Axikon immer anstelle des Prismas verwendet werden, nicht aber umgekehrt. Der geringeren Anwendungsbreite des Prismas steht jedoch dessen einfachere Herstellung gegenüber.

Fig. 4 zeigt eine erste Anwendung des Phasenmischers nach Fig. 2 in einer interferometrischen Anordnung zur Oberflächenprüfung. Bei dieser Einrichtung, deren Einzelheiten in der DE-B-26 36 498 beschrieben sind, wird ein erstes Strahlenbündel (Objektstrahlenbündel) 42 unter einem Einfallswinkel $\Theta$ auf die zu untersuchende Oberfläche 40 gerichtet, von wo aus es auf ein Gitter 41 reflektiert wird, um dort gebeugt zu werden. Ein zweites Strahlenbündel (Bezugsstrahlenbündel) 43 trifft direkt unter einem schiefen Einfallswinkel auf das Gitter 41, wo es ebenfalls gebeugt wird. Gitterkonstante und Einfallswinkel sind so gewählt, dass eine gewünschte Beugungsordnung der beiden Bündel 42 und 43 parallel zueinander verläuft und das gewünschte Ausgangsbündel 44 erzeugt, das zur Auswertung über eine Linse 45 auf eine Fernsehkamera 46 gerichtet wird. Die Auswertung des entstehenden Höhenschichtbildes kann dann entweder visuell oder in einer automatischen Bildauswerteeinrichtung erfolgen.

Bei der optischen Strahlführung in diesem interferometrischen Oberflächen-Prüfsystem gelangen jeweils zwei Strahlen (z.B. 400 und 401) zur Interferenz, die symmetrisch zur Trennebene der beiden Strahlenbündel 42 und 43 liegen. Zur Phasensymmetrisierung eignet sich daher ein Phasenmischer mit einem Prisma 47 und einem Strahlteiler 48, der dem Strahlaufweitungs- und Kollimatorsystem 49 optisch nachgeschaltet ist. In Abwandlung des Strahlengangs von Fig. 2 wird hier das Prisma 47 direkt mit dem Ausgangsbündel des Kollimators beleuchtet (in senkrechter Inzidenz zur Hypotenuse des Prismas) und die symmetrisierten Bündel durch Reflexion am Strahlteiler 48 ausgekoppelt. Die dem Kollimator 49 zugewandte Seite des Strahlteilers 48 braucht keine besonders hohen Ebenheitsansprüche zu erfüllen; die Vorderseite, an der die symmetrisierten Bündel reflektiert werden, muss dagegen möglichst eben (Genauigkeit $\lambda/20$ bis $\lambda/40$) ausgestaltet werden. Bei der Anordnung des Strahlteilers nach Fig. 2 müssen dessen beide Seiten mit sehr grosser Präzision gearbeitet sein, da sonst das symmetrisierte Strahlenbündel erneut gestört wird. Die Anordnung nach Fig. 4 weist diesen Nachteil nicht auf und ist deshalb vorzuziehen. Der Strahlteiler 48 ist drehbar zur Mittelachse angeordnet und kann auch verschoben werden, so dass die feststehende Messanordnung (40, 41) unter einem beliebigen Winkel Θ beleuchtet werden kann.

Fig. 5 zeigt eine weitere Anwendung eines prismatischen Phasenmischers, mit der die Güte optischer Abbildungssysteme überprüft werden kann; Einzelheiten dieser Einrichtung sind in der EP-A-0040700 (Prioritätsdatum: 24.05.80, Veröffentlichungsdatum: 02.12.81) beschrieben. Dort werden in zwei aufeinanderfolgenden interferometrischen Messschritten die Kontaktkopie eines Ur-Gitters mit der Kopie verglichen, die von dem zu prüfenden Abbildungssystem erzeugt wurde. Dazu wird jedes Gitter (die nacheinander in die Stellung 50 gebracht werden) einmal direkt von einem Strahlenbündel 52 unter einem Einfallswinkel O beleuchtet und zum anderen von einem Strahlenbündel 53, das nach Reflexion an einem ebenen Spiegel 51 ebenfalls unter dem Einfallswinkel Θ beleuchtet und zum anderen von einem Strahlenbündel 53, das nach Reflexion an einem ebenen Spiegel 51 ebenfalls unter dem Einfallswinkel Θ und symmetrisch zum ersten Bündel 52 zwischen den beiden Bündeln 52 und 53 liegen. Zur Symmetrisierung der Phasen in beiden Bündeln 52 und 53 wird wieder ein Prisma 56 und eine Strahlteilerplatte 57 verwendet, die optisch hinter einer Strahlaufweitungs- und Kollimiereinrichtung 58 angeordnet sind. Der Strahlenverlauf in diesem Phasenmischer entspricht dem anhand von Fig. 4 erläuterten.

Bei der Prüfung der Abbildungsgüte höchstauflösender optischer Systeme, z.B. photolithographischer Apparaturen, wird auf höchste Messgenauigkeit Wert gelegt. Diese Genauigkeit liess sich bei der beschränkten optischen Qualität bisheriger Kollimatorsysteme nur erreichen, indem die beiden Bündel 52 und 53 von zwei separaten, höchstkorrigierten Kollimatoren mit relativ kleinen Linsendurchmessern erzeugt wurden. Mit der hier zur Verfügung gestellten Phasenmischung entfällt diese Beschränkung, da jetzt auch Kollimatoren grossen Durchmessers die notwendige Messgenauigkeit erbringen. Anstelle eines zweiten Kollimatorsystems wird daher der (sehr genau gearbeitete) ebene Spiegel 51 unter genau 90° zum Gitter 50 angeordnet; dadurch werden unabhängig vom Wert des Einfallswinkels stets gleiche Einfallswinkel für die beiden Strahlenbündel 52 und 53 garantiert. Die Gitterkonstante im Gitter 50 wird so gewählt, dass die sich überlagernden + und -n-ten Beugungsordnungen der Bündel 52 und 53 senkrecht zur Gitterebene verlaufen und im optischen System 54, 55 abgebildet werden. In einem Versuchsaufbau wurde beispielsweise die vierte Beugungsordnung ($n = 4$) gewählt und dafür ein Winkel von $\Theta = 39,5°$ eingestellt.

Bei einer der anhand von Fig. 5 beschriebenen Messungen mit jeweils zwei Messschritten wird die Abbildungsgüte in jeweils einer Koordinatenrichtung bestimmt. Die Überprüfung beider Koordinatenrichtungen (x und y) kann in einer Messung erfolgen, wenn als Vorlage zwei senkrechte zueinander orientierte Gittermuster verwendet werden (oder auch radiale Gitterstrich-Anordnungen). In diesen Fällen ist dann ein rotations-symmetrischer Phasenmischer (Axikon) zu verwenden.

Neben den bisher beschriebenen Anwendungsbeispielen kann das hier vorgeschlagene Phasenmisch-Verfahren grundsätzlich bei allen optischen Einrichtungen verwendet werden, bei denen zwei Strahlenbündel zur Erzeugung von Interferenz überlagert werden (z.B. Interferometer nach Michelson, Mach-Zehnder, Jamin, Fabry-Perot, Loyd, Erzeugung von Gitterfiguren durch zwei überlappende ebene Wellenfelder usw.). Von Fall zu Fall muss dabei untersucht werden, welche Symmetrien für die miteinander interferierenden Strahlen eines Bündels vorliegen, um zu entscheiden, ob zur Phasenmischung ein Prismenmischer ausreicht oder ein Axikon verwendet werden sollte.

### Patentansprüche

1. Interferometrisches Verfahren, bei dem zwei optische Strahlenbündel (24, 25) mit im Prinzip ebenen Ausgangs-Wellenfronten zur Überlagerung gebracht werden, dadurch gekennzeichnet, dass den beiden Strahlenbündeln, (24, 25) an denjenigen Punkten ihres jeweiligen Querschnitts, die miteinander zur Interferenz kommende Strahlen enthalten, dieselbe lokale, nach Betrag und Phase gemessene Wellenfrontdeformation relativ zur ideal ebenen Welle aufgeprägt wird.

2. Verfahren nach Anspruch 1, dadurch gekennzeichnet, dass aus einem Eingangsbündel (21) zwei zu einer Symmetrieebene oder Symmetrieachse (BB') symmetrische Teilbündel erzeugt werden, und dass jedes dieser Teilbündel mit dem jeweils anderen, um eine feste Phase verschobenen Teilbündel zur Erzeugung der beiden symmetrisierten Strahlenbündel (24, 25) überlagert wird.

3. Optischer Phasenmischer zur Durchführung des Verfahrens nach Anspruch 2, dadurch gekennzeichnet, dass zur Erzeugung zweier zu einer Ebene symmetrischen Ausgangsbündel (24, 25) ein Eingangsbündel (21) mit näherungsweise ebenen Wellenfronten unter einem Einfallswinkel von 90° auf die teilverspiegelte Hypotenusenfläche eines einen Scheitelwinkel von 90° aufweisenden Dachkantprismas (20) gerichtet wird, dessen Kathetenflächen vollverspiegelt sind.

4. Phasenmischer zur Durchführung des Verfahrens nach Anspruch 2, dadurch gekennzeichnet, dass zur Erzeugung eines rotationssymmetrischen Ausgangsbündels (31) ein Eingangsbündel (21) mit näherungsweise ebenen Wellenfronten unter einem Einfallswinkel von 90° auf die teilverspiegelte Grundfläche eines Axikons (30) gerichtet wird, dessen Konusflächen vollverspiegelt sind.

5. Phasenmischer nach Anspruch 3 oder 4, dadurch gekennzeichnet, dass vor dem optischen Mischelement (20; 30) eine optische Strahlteilerplatte (22) angebracht ist.

6. Phasenmischer nach Anspruch 5, dadurch gekennzeichnet, dass die symmetrisierten Strahlenbündel durch Reflexion an der dem optischen Mischelement (20; 30) zugekehrten Oberfläche des Strahlteilers ausgekoppelt werden.

7. Phasenmischer nach einem der Ansprüche 3 bis 6, dadurch gekennzeichnet, dass die optischen Flächen des optischen Mischelements (20; 30) und der Strahlteilerplatte auf eine Genauigkeit von λ/20 oder besser gearbeitet sind, wobei λ die Wellenlänge des verwendeten Lichtes ist.

8. Phasenmischer nach einem der Ansprüche 3 bis 7, gekennzeichnet durch seine Verwendung zur Erzeugung von Bezugs- und Objektstrahlenbündeln (43, 42) in einem interferometrischen Gerät zur Oberflächenprüfung, bei dem das Bezugsstrahlenbündel (43) unter schiefer Inzidenz direkt auf ein reflektierendes Gitter (41) fällt und das Objektstrahlenbündel (42) nach Reflexion an der zu prüfenden Oberfläche (40).

9. Phasenmischer nach einem der Ansprüche 3 bis 7, gekennzeichnet durch seine Verwendung zur Erzeugung von zwei unter identischen Winkeln auf ein zu prüfendes Gitter (50) einfallenden Strahlenbündeln (52, 53) in einem interferometrischen Gerät zur Prüfung der Abbildungsgüte optischer Systeme, bei dem das eine Strahlenbündel (52) direkt und das zweite Strahlenbündel (53) nach Reflexion an einem ebenen, senkrecht zum Gitter angeordneten Spiegel (51) auf das Gitter (50) auftrifft.

**Claims**

1. Interferometric method, wherein two optical beams (24, 25) with substantially plane output wave fronts are superimposed on each other, characterized in that the same amplitude and phase of the local wave front deformation relative to the ideal plane wave are impressed on the two beams (24, 25) at those points of the respective beam cross-section containing interfering beams.

2. Method according to claim 1, characterized in that two partial beams symmetrical to a plane or an axis of symmetry (B,B′) are generated from an input beam (21), and that for generating the two symmetrized beam (24, 25), each of these partial bems is superposed by another partial beam which is shifted by a fixed phase.

3. Optical phase mixer for implementing the method according to claim 2, characterized in that for generating two output beams (24, 25) symmetrical to a plane, an input beam (21) with two approximately plane wave fronts is directed at an angle of incidence of 90° on to the partially reflecting hypotenuse face of a 90° vertex angle roof prism (20), whose short faces are fully reflecting.

4. Phase mixer for implementing the method according to claim 2, characterized in that for generating a rotational-symmetrical output beam (31), an input beam (21) with two approximately plane wave fronts is directed at an angle of incidence of 90° on to the partially reflecting base face of an axicon (30), whose conical faces are fully reflecting.

5. Phase mixer according to claim 3 or 4, characterized in that on optical beam splitter plate (22) is arranged in front of the optical mixer (20; 30).

6. Phase mixer according to claim 5, characterized in that the symmetrical beams are coupled out by reflection at the surface of the beam splitter facing the optical mixer (20; 30).

7. Phase mixer according to any one of the claims 3 to 6, characterized in that the optical faces of the optical mixer (20; 30) and the beam splitter plate are processed to an accuracy of λ/20 or better, where λ is the wavelength of the light used.

8. Phase mixer according to any one of the claims 3 to 7, characterized by its being used to generate reference and object beams (43, 42) in an interferometric device for surface testing, wherein the reference beam (43) is directly obliquely incident on the reflecting grating (41) and the object beam (42) is directly obliquely incident after reflection at the surface (40) to be tested.

9. Phase mixer according to any one of the claims 3 to 7, characterized by its being used to generate two beams (52, 53) incident at two identical angles on a grating (50) to be tested in an interferometric device for testing the image quality of optical systems, wherein one beam (52) is directly incident and the second beam (53) is incident on the grating (50) after reflection at a plane mirror (51) arranged perpendicularly to the grating (50).

**Revendications**

1. Procédé interférométrique dans lequel on met en superposition deux faisceaux de rayons optiques (24, 25) possédant des fronts d'ondes en principe plans, caractérisé en ce que l'on imprime aux deux faisceaux de rayons (24, 26), aux points de leurs sections respectives qui contiennent des rayons entrant en interférence entre eux, la même déformation locale de front d'onde, mesurée en amplitude et en phase, par rapport à une onde parfaitement plane.

2. Procédé selon la revendication 1, caractérisé en ce qu'à partir d'un faisceau d'entrée (21), on produit deux faisceaux partiels symétriques par rapport à un plan de symétrie ou par rapport à un axe de symétrie (BB′) et en ce que chacun de ces faisceaux partiels est superposé à l'autre faisceau partiel, décalé d'une différence de phase fixe, pour produire les deux faisceaux de rayons symétrisés (24, 25).

3. Mélangeur de phases optiques pour la mise en œuvre du procédé selon la revendication 2, caractérisé en ce que, pour produire deux faisceaux de sortie (24, 25) symétriques par rapport à un plan, on projette un faisceau d'entrée (21) possédant des fronts d'ondes approximativement plans, et sous un angle d'incidence de 90°, sur la surface d'hypoténuse semi-argentée d'un prisme en toit (20) présentant un angle au sommet de 90°, dont les surfaces des côtés de l'angle droit sont entièrement argentées.

4. Mélangeur de phases pour la mise en œuvre du procédé selon la revendication 2, caractérisé en ce que, pour produire un faisceau de sortie (31) possédant une symétrie par rapport à un axe, on projette le faisceau d'entrée (21) possédant des fronts d'ondes à peu près plans, sous un angle d'incidence de 90°, sur la surface de base semi-argentée d'un Axikon (30) dont les surfaces latéralesconiques sont entièrement argentées.

5. Mélangeur de phases selon la revendication 3 ou la revendication 4, caractérisé en ce qu'une plaque diviseuse de faisceau optique (22) est disposée devant l'élément mélangeur optique (20; 30).

6. Mélangeur de phases selon la revendication 5, caractérisé en ce que les faisceaux de rayons symétrisés sont découplés par réflexion sur la surface du diviseur de faisceau qui regarde l'élément mélangeur optique (20; 30).

7. Mélangeur de phases selon l'une quelconque des revendications 3 à 6, caractérisé en ce que les surfaces optiques de l'élément mélangeur optique (20; 30) et de la plaque diviseuse de faisceau sont travaillées à une précision de $\lambda/20$ ou mieux, $\lambda$ étant la longueur d'onde de la lumière utilisée.

8. Mélangeur de phases selon l'une des revendications 3 à 7, caractérisé en ce qu'il est utilisé pour produire des faisceaux de rayons de référence et objet (43, 42) dans un appareil interférométrique destiné au contrôle des surfaces, dans lequel le faisceau de rayons de référence (43) tombe directement sous une incidence oblique sur un réseau réflecteur (41) tandis que le faisceau de rayons objet (42) tombe sur ce réseau réflecteur après avoir été réfléchi sur la surface (40) à contrôler.

9. Mélangeur de phases selon l'une des revendications 3 à 7, caractérisé en ce qu'il est utilisé pour produire deux faisceaux de rayons (52, 53) qui tombent sous des angles identiques sur un réseau (50) à contrôler, dans un appareil interférométrique servant au contrôle de la qualité de reproduction de systèmes optiques, dans lequel l'un des faisceaux de rayons (52) tombe directement sur le réseau (50) tandis que le deuxième faisceau de rayons (53) tombe sur ce réseau après réflexion sur un miroir plan (51) disposé perpendiculairement au réseau.

0 079 981

FIG. 1A

FIG. 1B

FIG. 2

7

**0 079 981**

FIG. 3

FIG. 4

FIG. 5